# EUROPÄISCHE PATENTSCHRIFT

(11) **EP 3 109 928 B1**
(45) Veröffentlichungstag und Bekanntmachung des Hinweises auf die Patenterteilung: **14.08.2019**
(21) Anmeldenummer: 15173709.5
(22) Anmeldetag: 24.06.2015
(51) Int. Cl.: H01M 4/04, H01M 4/139, H01M 4/1393, H01M 4/62, H01M 4/133, H01M 10/052

(54) **VERFAHREN ZUM HERSTELLEN EINER ELEKTRODE INSBESONDERE FÜR ELEKTROCHEMISCHE ENERGIESPEICHER, SOWIE EINE ELEKTRODE UND EINEN ELEKTROCHEMISCHEN ENERGIESPEICHER**
METHOD FOR PRODUCING AN ELECTRODE, IN PARTICULAR FOR ELECTROCHEMICAL ENERGY STORAGE AND ELECTRODE AND ELECTROCHEMICAL ENERGY STORAGE
PROCÉDÉ DE FABRICATION D'UNE ÉLECTRODE EN PARTICULIER POUR UN ACCUMULATEUR D'ÉNERGIE ÉLECTROCHIMIQUE ET ÉLECTRODE ET ACCUMULATEUR D'ÉNERGIE

(43) Veröffentlichungstag der Anmeldung: 28.12.2016
(73) Patentinhaber: Airbus Defence and Space GmbH, 85521 Ottobrunn (DE)
(72) Erfinder: Ohnesorge, Alexander, 85649 Brunnthal (DE); Pilawa, Michael, 80807 München (DE); Karch, Christian, 85579 Neubiberg (DE); Steinwandel, Jürgen, 88690 Uhldingen-Mühlhofen (DE)
(74) Vertreter: LKGLOBAL Lorenz & Kopf PartG mbB Patentanwälte

(56) Entgegenhaltungen:
- WO-A1-2012/085105
- US-A1- 2007 275 627
- US-A1- 2011 024 158
- US-A1- 2013 130 116

## Beschreibung

### TECHNISCHES GEBIET

Die Erfindung betrifft ein Verfahren zum Herstellen einer Elektrode insbesondere für elektrochemische Energiespeicher, sowie eine Elektrode und einen elektrochemischen Energiespeicher.

### HINTERGRUND DER ERFINDUNG

Elektrochemische Energiespeicher, wie etwa Lithium-Ionen-Batterien, besitzen eine negative Elektrode und eine positive Elektrode, die durch einen Separator voneinander getrennt von einem vorzugsweise wasserfreien Elektrolyten umgeben sind. Das aktive Material der negativen Elektrode, die beim Laden des Energiespeichers eine Kathode ist, beim Entladen eine Anode, besteht üblicherweise aus Graphit oder verwandten Kohlenstoffen, bei denen eine Einlagerung (Interkallation) von Lithium stattfinden kann. Das aktive Material der positiven Elektrode, die beim Laden eine Anode ist, beim Entladen eine Kathode, weist häufig Übergangsmetallverbindungen, etwa Lithium-Metalloxid-Verbindungen auf. Beispielsweise sind hierfür LiCoO₂ und verwandte Verbindungen verbreitet.

Ist der Energiespeicher geladen, liegt eine elektrische Potentialdifferenz zwischen dem aktiven Material der negativen Elektrode dem aktiven Material der positiven Elektrode vor. Lithium kann sich in ionisierter Form durch den Elektrolyten zwischen den beiden Elektroden bewegen, was den externen Stromfluss beim Laden und Entladen des Energiespeichers ausgleicht, so dass die Elektroden weitgehend elektrisch neutral bleiben. Die in der negativen Elektrode eingelagerten Lithiumionen geben jeweils ein Elektron ab, das über den externen Stromkreis zu der positiven Elektrode fließt. Gleichzeitig wandert eine korrespondierende Anzahl von Lithiumionen durch den Elektrolyten von der negativen zu der positiven Elektrode, wo sie von der dort vorhandenen Übergangsmetallverbindung aufgenommen werden.

Um die Kapazität von Interkallationsmaterialien wie Graphit zu steigern, wird unter anderem versucht, Kohlenstoffallotrope wie Graphen (Flakes, Sheets, Kohlenstoff-Nanoröhrchen, Kohlenstoff-Nanofasern) einzusetzen, da Graphit eine relativ niedrige Speicherkapazität für Lithiumionen aufweist und nur eine beschränkte Zugänglichkeit für Kationen besteht.

Bei der Herstellung der Aktivmaterialschicht einer Elektrode mit Graphenen werden oft Suspensionen verwendet, die auf ein geeignetes Substrat, beispielsweise aus Kupfer oder einem anderen elektrisch leitfähigen Material, aufgetragen und anschließend ausgehärtet werden.

US 2007/0275627 A1 betrifft ein Verfahren zur Herstellung einer Feldemitterelektrode, bei der Kohlenstoff-Nanoröhrchen (CNTs) in Richtung eines erzeugten Magnetfeldes ausgerichtet sind. Insbesondere umfasst das Verfahren die Schritte des Dispergierens einer Lösung von Kohlenstoffnanoröhrchen (CNTs), die in einem Lösungsmittel verdünnt sind, auf einem Substrat, das an dem oberen Teil eines Generators für ein elektromagnetisches Feld befestigt ist, und Fixieren der Kohlenstoffnanoröhrchen in der Richtung eines erzeugten elektromagnetischen Feldes von dem elektromagnetischen Feldgenerator. Gemäß dem offenbarten Verfahren können Kohlenstoffnanoröhren mit hoher Dichte und hoher Kapazität, die in der Richtung eines erzeugten elektromagnetischen Feldes ausgerichtet sind, in einem einfachen Prozess hergestellt werden und können als positive Elektrodenmaterialien für Feldemissionsanzeigen (FEDs), Sensoren und Elektroden verwendet werden.

WO 2012/085105 A1 betrifft ein Verfahren zur Herstellung eines Batterieelektrodenmaterials mit den Schritten: a) Anlegen eines elektrischen Feldes an mindestens ein Polymer, leitfähige Partikel und mindestens ein Lösungsmittel, wobei die leitfähigen Partikel zwischen den Elektroden in mindestens zwei Reihen angeordnet werden, die in der gleichen Richtung orientiert sind wie die elektrische Feldlinie, und b) das mindestens eine Polymer, leitfähige Partikel und mindestens ein Lösungsmittel durch Entfernen mindestens eines Teils des mindestens einen Lösungsmittels unter Beibehaltung des elektrischen Feldes in Schritt a) stabilisiert wobei die mindestens zwei Linien von leitfähigen Teilchen in ihrer Position verbleiben, wenn das elektrische Feld entfernt wird. Ferner betrifft die Erfindung ein Batterieelektrodenmaterial, das mindestens ein Polymer und leitfähige Partikel umfasst, wobei die leitfähigen Partikel mindestens zwei Linien bilden, die parallel und/oder kollinear zueinander ausgerichtet sind.

US 2013/0130116 A1 betrifft eine Metall-Schwefel-Elektrode für eine Lithium-Schwefel-Batterie und ein Verfahren zur Herstellung derselben. Insbesondere wird eine Metall-Schwefel-Elektrode für eine Lithium-Schwefel-Batterie hergestellt, indem eine Aufschlämmung, die Schwefel, ein leitfähiges Material und ein Bindemittel als Elektrodenaktivmaterial enthält, auf eine Metallelektrode aufgetragen und getrocknet wird, während ein elektrisches Feld angelegt wird, so dass das leitfähige Material angemessen ausgerichtet ist, um eine maximale Effizienz während wiederholten Ladens und Entladens bereitzustellen, wenn es in der Anode der Lithium-Schwefel-Batterie verwendet wird.

US 2011/0024158 A1 betrifft einen leitenden Draht, der eine Aramidfaser und mindestens eine Schicht, die um die Aramidfaser herum angebracht ist, umfasst, wobei die mindestens eine Schicht mindestens eines von ausgerichteten Kohlenstoffnanoröhrchen und Graphenplättchen umfasst.

### ZUSAMMENFASSUNG DER ERFINDUNG

Es ist eine Aufgabe der Erfindung, eine Aktivmaterialschicht insbesondere von negativen Elektroden für einen Energiespeicher bzw. ein hierfür geeignetes Herstellungsverfahren vorzuschlagen, bei dem eine deutlich verbesserte Interkallation bei gleichzeitig hoher Kapazität des Aktivmaterials erreicht wird. Die Aufgabe wird gelöst durch ein Verfahren zum Herstellen einer Elektrode mit den Merkmalen des unabhängigen Anspruchs 1. Vorteilhafte Ausführungsformen und Weiterbildungen sind in den Unteransprüchen und der nachfolgenden Beschreibung zu entnehmen.

Es wird ein Verfahren zum Herstellen einer Elektrode vorgeschlagen, das die Schritte des Aufbringens einer Suspension aus einem ein Lösungsmittel aufweisenden Suspensionsmedium und elektrisch leitfähigen Kohlenstoffallotropen in Form von Graphen-Flakes auf einem Substrat, des Erzeugens eines die Suspension durchdringenden elektrischen Feldes mit einer vorgegebenen Feldrichtung relativ zu dem Substrat zum Ausrichten der Kohlenstoffallotrope in der Feldrichtung und des Entfernens des Lösungsmittels aus dem Suspensionsmedium zum Aushärten der Suspension, wobei die Ausrichtung der Kohlenstoffallotrope beibehalten wird, wobei das Entfernen des Lösungsmittels aus dem Suspensionsmedium das Erwärmen der Suspension zum Verdampfen des Lösungsmittels aus dem Suspensionsmedium aufweist, wobei das Erwärmen durch Zufuhr von Mikrowellenstrahlung erfolgt, und wobei während zumindest eines Teils des Erwärmens das elektrische Feld aufrecht erhalten wird.

Das Substrat, welches als Stromableiter fungieren kann und die äußere Form der Elektrode bestimmt, ist in dem erfindungsgemäßen Verfahren als Basisschicht zu verstehen, welche möglichst gleichmäßig mit der Suspension benetzt wird. Wie eingangs erwähnt, kann dieses Material aus Kupfer oder einem anderen elektrisch leitfähigen Material, beispielsweise Aluminium, oder einer Legierung hieraus bestehen. Der konkrete Aufbau des Substrats ist für die Ausführung des erfindungsgemäßen Verfahrens nicht erheblich, es können aber die üblicherweise eingesetzten Verfahren zur Vorkonditionierung beispielsweise von Ableiterfolien zum Einsatz kommen. Hierzu gehören unter anderem eine Plasmavorbehandlung zur Beseitigung von Verunreinigungen und zur chemischen Aktivierung, das Aufbringen von Primerschichten für eine bessere Anbindung des Aktivmaterials und auch eine Strukturierung der Oberfläche.

Die Suspension, welche ein Suspensionsmedium mit einem Lösungsmittel und je nach Bedarf zusätzlich diversen Zusatzstoffen, etwa Binder und Leitadditive, sowie den elektrisch leitfähigen Kohlenstoffallotropen, bildet eine Schlickerschicht auf dem Substrat, in dem die Kohlenstoffallotrope zumindest in einem gewissen Rahmen frei beweglich enthalten sind. Folgende Systeme sind als Suspensionsmedium verbreitet:
a) NMP-Lösungsmittel (N-Methyl-2-pyrrolidon) mit PVDF-Binder (Polyvinylidenfluorid) und Leitadditiven
b) Wasserbasierte Lösemittel mit SBR-Binder (Styrol-Butadien-Kautschuk) und CMC-Binder (Carboxymethylcellulose)

Die Kohlenstoffallotrope können in jeglicher Art und in unterschiedlichen Größen ausgeführt sein, solange sie elektrisch leitfähig sind und suspendiert werden können.

Das elektrische Feld kann mit Hilfe von hierfür vorgesehenen, separaten Elektroden erzeugt werden, so dass es sich zumindest durch die Suspension erstreckt. Das Substrat selbst kann optional eine der hierfür notwendigen Elektroden ausbilden. Dadurch entsteht ein Dipolmoment an den Kohlenstoffallotropen, so dass diese sich in Feldrichtung des elektrischen Feldes ausrichten. Dies wird durch die Auswahl eines geeigneten Suspensionsmediums und eines Mischungsverhältnisses begünstigt.

Anschließend wird der erreichte Zustand mit ausgerichteten Kohlenstoffallotropen "eingefroren", indem das Lösungsmittel aus der Suspension wieder entfernt wird, so dass sich hieraus eine Aktivmaterialschicht ergibt. Die Kohlenstoffallotrope bilden folglich eine homogen ausgerichtete Schicht auf dem Substrat, wodurch die Zugänglichkeit für die einzulagernden (Kat-) Ionen deutlich gegenüber einer geometrisch zufälligen Anordnung innerhalb einer derartigen Aktivmaterialschicht verbessert wird. Die Oberfläche der Kohlenstoffallotrope und das Volumen des aktiven Materials wird deutlich besser für die elektrochemischen Prozesse eines elektrochemischen Energiespeichers genutzt. Neben der erhöhten Kapazität von beispielsweise Graphenen oder Kohlenstoffnanoröhrchen gegenüber konventionellen, Graphit-basierten Materialien, wird die Diffusion der Kationen begünstigt, d. h. die Diffusionswege werden deutlich verkürzt, was sich positiv auf die erreichbaren Amplituden der Be- und Entladeströme auswirkt. Durch die geometrische Ausrichtung der Kohlenstoffallotrope wird folglich die Diffusion der im Energiespeicher ausgetauschten Ionen begünstigt und beschleunigt. Ein elektrochemischer Energiespeicher mit einer auf derartige Weise hergestellten Elektrode weist somit eine verbesserte Hochstromfähigkeit, als auch eine verbesserte spezifische Leistungsdichte auf. Die Dauer für Be- und Entladungsvorgänge kann folglich deutlich verkürzt werden, was signifikante Vorteile bei der Benutzung des Energiespeichers bewirkt.

In einer vorteilhaften Ausführungsform sind die Kohlenstoffallotrope makromolekulare Kohlenstoffallotrope. Hierunter fallen Kristallformen des Kohlenstoffs, die einen deutlich komplexeren Aufbau als Graphit aufweisen, worunter beispielsweise Graphene, Kohlenstoff-Nanoröhrchen, Kohlenstoff-Nanofasern fallen. Die Speicherkapazität wird gegenüber Graphit-basierten Materialen deutlich erhöht, so dass sich bei einer Spannungslage von 0,7 Volt gegenüber Li/Li+ beispielsweise bei Graphen-Nanoflakes eine Kapazität von 780 mAh / g ergibt, während bei der Verwendung von Graphit eine Kapazität von ungefähr 370 mAh / g Gramm ergeben würde. Folglich können die Kohlenstoffallotrope aus einer Gruppe von Kohlenstoffallotropen ausgewählt sein, wobei die Gruppe Graphen, Kohlenstoff-Nanoröhrchen, Kohlenstoff-Nanofasern und Fullerene aufweist.

Das Entfernen des Lösungsmittels aus der Suspension weist das Erwärmen der Suspension zum Verdampfen des Lösungsmittels auf. Die Erwärmung kann sowohl durch aktive Zufuhr von Wärme kontaktbasiert über das Substrat oder durch Wärmestrahlung und alternativ über das Zuführen von einer anderen energiereichen Strahlung, erfindungsgemäß von Mikrowellen, erreicht werden. Das Verdampfen des Lösungsmittels erfolgt bevorzugt derart, dass bei dem Verdampfungsvorgang die zuvor ausgerichtete Struktur der Kohlenstoffallotrope nicht gestört wird. Hierfür kann es sich anbieten, die Wärmezufuhr auf einen bestimmten Wärmefluss und damit die Verdampfungsrate zu begrenzen. Während zumindest eines Teils des Erwärmungsvorgangs wird das elektrische Feld aufrecht erhalten.

Das Aufbringen der Kohlenstoffallotrope kann ferner das gezielte Anwachsen von Kohlenstoff-Nanoröhrchen aufweisen, etwa durch Einsatz einer chemischen Gasphasenabscheidung, bei der Kohlenwasserstoffe katalytisch zersetzt werden, so dass auf dem Substrat Kohlenstoff-Nanoröhrchen wachsen. Durch Einwirkung des elektrischen Feldes kann die Formierung der Kohlenstoff-Nanoröhrchen bestimmt bzw. begünstigt werden.

Das Substrat kann eine ebene Oberfläche aufweisen, wobei die Kohlenstoffallotrope orthogonal zu der ebenen Oberfläche ausgerichtet werden. Die orthogonale Ausrichtung relativ zu einer Hauptebene des Stromableiters bzw. des Speichermediums ist besonders vorteilhaft. Die Kohlenstoffallotrope sind im zusammengesetzten Zustand des Energiespeichers folglich zu der gegenüberliegenden positiven Elektrode gerichtet und die Lithiumionen können besser und schneller in die Struktur des aktiven Materials der Elektrode, d.h. in die Zwischenräume zwischen den Kohlenstoffallotropen eindringen. Neben einer begünstigten Diffusion, welche zu höheren C-Raten sowohl bei einem Lade- als auch einem Entladevorgang führt, können tieferliegende Bereiche des Aktivmaterials besser erreicht und genutzt werden. Dies führt zu einer Erhöhung der Speicherkapazität im Vergleich zu Systemen, die nicht mit dem hier beschriebenen Verfahren aufgebaut wurden, sowie zu einer signifikanten Ladezeitverkürzung.

Die Erfindung betrifft ferner eine Elektrode für einen Energiespeicher, die nach dem vorangehend dargestellten Verfahren hergestellt ist. Die Elektrode ist vorzugsweise eine negative Elektrode für einen Energiespeicher und kann durch ihre bei der Herstellung gewonnene Strukturierung die Eigenschaften des Energiespeichers wie vorangehend erwähnt verbessern. Allerdings kann die durch das vorangehend dargestellte Verfahren herstellbare Elektrode auch als positive Elektrode verwendet werden, beispielsweise in einem auf einem Lithium-Schwefel-System basierenden Energiespeicher.

Die Erfindung betrifft ebenso einen Energiespeicher, der mindestens eine solche Elektrode aufweist. Der Energiespeicher ist vorzugsweise auf Lithium-Ionenbasis aufgebaut und besitzt folglich mindestens eine Elektrode, insbesondere, jedoch nicht ausschließlich oder unbedingt, eine negative Elektrode, die mit dem vorangehend genannten Verfahren hergestellt ist.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt einen ersten Schritt des Herstellverfahrens in einer schematischen Darstellung in Form des Auftragens einer Suspension.
Fig. 2 zeigt ein angelegtes elektrisches Feld nach dem ersten Schritt und die ausgerichteten Graphen-Strukturen.
Fig. 3 zeigt das Aushärten der Suspension.

### DETAILLIERTE DARSTELLUNG EXEMPLARISCHER AUSFÜHRUNGSFORMEN

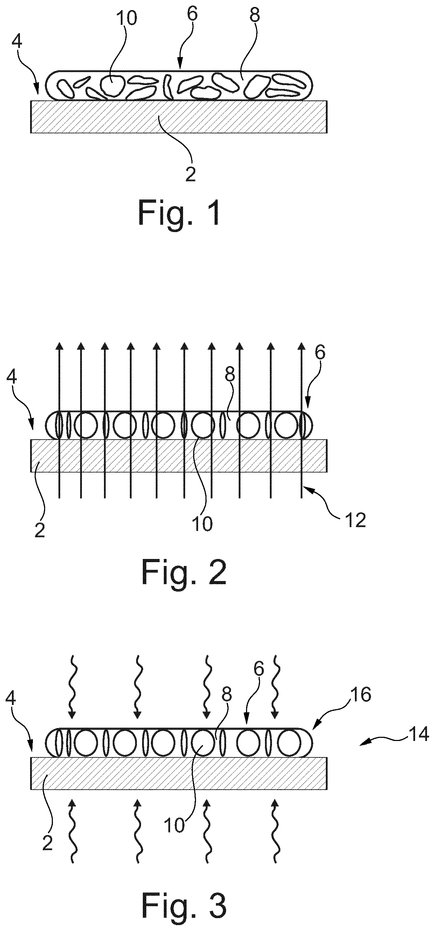

Fig. 1 zeigt ein Substrat 2 mit einer oberen Oberfläche 4, auf die eine Suspension 6 aus einem ein Lösungsmittel aufweisenden Suspensionsmedium 8 und darin enthaltenen Kohlenstoffallotropen 10 aufgebracht wird. Beispielhaft werden diese als Graphen-Flakes ausgeführt und weisen daher eine flächige Form mit unterschiedlichen Größen auf. Die Kohlenstoffallotrope 10 sind zumindest teilweise frei in der Suspension 6 beweglich und können folglich unterschiedliche Orientierungen aufweisen.

Die Suspension 6 kann durch geeignete Auftragsverfahren aufgebracht werden, die das Aufrakeln, das Auftragen mit Hilfe einer Auftragwalze, das Aufsprühen oder andere Verfahren mit einem oder mehreren Auftragschritten umfassen können. Das Suspensionsmedium 8 kann vorher bereits mit entsprechenden Kohlenstoffallotropen 10 versetzt in einem Mischbehälter gespeichert sein, oder die Kohlenstoffallotrope 10 und das Suspensionsmedium 8 werden jeweils für sich, insbesondere wechselweise, schichtweise aufgetragen.

Wie in Fig. 2 dargestellt wird nach erfolgtem vollständigem Aufbringen der Suspension 6 ein elektrisches Feld 12 generiert, welches sich durch die Suspension 6 erstreckt. Dies kann durch ein Paar von Elektroden generiert werden, welche an eine Gleichspannung mit geeigneter Höhe angeschlossen werden. Beispielhaft kann das Substrat 2 als eine der Elektroden genutzt werden, während eine zweite Elektrode in einem Abstand hierzu auf einer dem Substrat 2 entgegengesetzten Seite der Suspension 6 angeordnet wird.

Durch Einwirkung des elektrischen Feldes 12 wird ein elektrisches Dipolmoment induziert. Da insbesondere durch Verschiebungspolarisation induzierte Dipolmomente deutlich kleiner als permanente Dipolmomente bei polaren Molekülen sind, bietet es sich an, ein relativ starkes elektrisches Feld zu gewährleisten. Eine ausreichende Beweglichkeit der Kohlenstoffallotrope 10 in dem Suspensionsmedium 8 muss sichergestellt sein, und den Kohlenstoffallotropen 10 ist eine ausreichende Zeit zur Ausrichtung einzuräumen.

Die Kohlenstoffallotrope 10 können sich den Feldlinien des elektrischen Feldes 12 folgend ausrichten. Das elektrische Feld 12 verläuft beispielhaft orthogonal zu dem Substrat 2, so dass sich die Kohlenstoffallotrope 10 folglich ebenfalls orthogonal hierzu ausrichten. Dadurch wird der Ionentransport in das aktive Material verbessert.

Alternativ zu dem Auftragen der Suspension gemäß Fig. 1 kann auch ein richtungsgesteuertes Anwachsen von Kohlenstoff-Nanoröhrchen oder anderen Kohlenstoffallotropen erreicht werden, so dass sich letztlich die gleiche Struktur in der Suspension 6 ergibt.

Wie in Fig. 3 dargestellt wird das Lösungsmittel aus dem Suspensionsmedium anschließend wieder entfernt, entsprechend etablierter Verfahrensweisen. Diese können beispielsweise eine Wärmeeinwirkung ausgehend von dem Substrat 2, eine Wärmestrahlung oder die Zufuhr anderer energiereicher Strahlungsformen, z.B. Mikrowellen oder Laser, umfassen, so dass das Lösungsmittel aus dem Suspensionsmedium 8 verdampft. Die Kohlenstoffallotrope 10 bleiben, nachdem sie die gewünschte geometrische Orientierung eingenommen haben, anschließend in der ausgerichteten Form auf der Oberfläche 4 des Substrats 2, ebenso Binder und Leitadditive aus dem Suspensionsmedium 8 und bilden damit eine strukturierte Aktivmaterialschicht 16 der Elektrode 14. Der gesamte Herstellungsprozess ausgerichteter Aktivmaterialschichten lässt sich in ein Rolle-zu-Rolle-Verfahren integrieren, wie es heutzutage zur Herstellung von Batteriekomponenten und Zellen Anwendung findet.

Mit dem hier beschriebenen Verfahren werden durch die geometrisch geordneten und ausgerichteten Kohlenstoffallotrope in den Aktivmaterialien der elektrochemischen Energiespeicher neben der Speicherkapazität durch eine bessere Ausnutzung der gesamten Aktivmaterialschicht auch die erzielbaren Lade- und Entladeraten erhöht und eine verbesserte Leistungsdichte der Speicher realisiert.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Verfahren zum Herstellen einer Elektrode (14) für einen Energiespeicher, aufweisend die Schritte:
- Aufbringen einer Suspension (6) aus einem ein Lösungsmittel aufweisenden Suspensionsmedium (8) und elektrisch leitfähigen Kohlenstoffallotropen (10) in Form von Graphen-Flakes auf einem Substrat (2),
- Erzeugen eines die Suspension (6) durchdringenden elektrischen Feldes (12) mit einer vorgegebenen Feldrichtung zum Ausrichten der Kohlenstoffallotrope (10) in der Feldrichtung, und
- Entfernen des Lösungsmittels aus dem Suspensionsmedium (8) zum Aushärten der Suspension (6), wobei die Ausrichtung der Kohlenstoffallotrope (10) beibehalten wird,
wobei das Entfernen des Lösungsmittels aus dem Suspensionsmedium (8) das Erwärmen der Suspension (6) zum Verdampfen des Lösungsmittels aus dem Suspensionsmedium (8) aufweist,
wobei das Erwärmen durch Zufuhr von Mikrowellenstrahlung erfolgt, und
wobei während zumindest eines Teils des Erwärmens das elektrische Feld aufrecht erhalten wird.

2. Verfahren nach einem der vorhergehenden Ansprüche, wobei das Substrat (2) einen elektrisch leitfähigen Stromableiter aufweist.

3. Verfahren nach einem der vorhergehenden Ansprüche, wobei das Substrat (2) eine ebene Oberfläche (4) aufweist und die Kohlenstoffallotrope (10) orthogonal zu der ebenen Oberfläche (4) ausgerichtet werden.

4. Elektrode (14) für einen Energiespeicher, die nach dem Verfahren gemäß einem der Ansprüche 1 bis 3 hergestellt ist.

5. Energiespeicher, aufweisend mindestens eine Elektrode (14) nach Anspruch 4.

## Claims

1. Method for producing an electrode (14) for an energy store, comprising the steps of:
- applying a suspension (6) made up of a suspension medium (8), comprising a solvent, and electrically conductive carbon allotropes (10) in the form of graphene flakes on a substrate (2),
- generating an electric field (12) that penetrates the suspension (6) and has a predefined field direction in order to align the carbon allotropes (10) in the direction of the field, and
- removing the solvent from the suspension medium (8) in order to harden the suspension (6), wherein the alignment of the carbon allotropes (10) is preserved,
wherein the removal of the solvent from the suspension medium (8) comprises heating the suspension (6) in order to evaporate the solvent out of the suspension medium (8),
wherein the heating is performed by supplying microwave radiation, and
wherein the electric field is maintained during at least part of the heating.

2. Method according to one of the preceding claims, wherein the substrate (2) comprises an electrically conductive current collector.

3. Method according to one of the preceding claims, wherein the substrate (2) has a planar surface (4) and the carbon allotropes (10) are aligned orthogonal to the planar surface (4).

4. Electrode (14) for an energy store produced by the method according to one of Claims 1 to 3.

5. Energy store, comprising at least one electrode (14) according to Claim 4.

## Revendications

1. Procédé de fabrication d'une électrode (14) pour un accumulateur d'énergie, comportant les étapes :
- application sur un substrat (2) d'une suspension (6) à partir d'un milieu de suspension (8) comportant un solvant et d'allotropes de carbone électriquement conducteurs (10) sous forme de flocons de graphène,
- production d'un champ électrique (12) traversant la suspension (6) avec une direction de champ prédéfinie pour orienter les allotropes de carbone (10) dans la direction du champ, et
- élimination du solvant du milieu de suspension (8) pour le durcissement de la suspension (6), dans lequel l'orientation des allotropes de carbone (10) est conservée,
dans lequel l'élimination du solvant du milieu de suspension (8) comporte le chauffage de la suspension (6) afin d'évaporer le solvant hors du milieu de suspension (8),
dans lequel le chauffage s'effectue par apport de rayonnement micro-ondes, et
dans lequel le champ électrique est maintenu pendant au moins une partie du chauffage.

2. Procédé selon l'une des revendications précédentes, dans lequel le substrat (2) comporte un collecteur de courant électriquement conducteur.

3. Procédé selon l'une des revendications précédentes, dans lequel le substrat (2) comporte une surface plate (4) et les allotropes de carbone (10) sont orientés de manière orthogonale à la surface plate (4).

4. Électrode (14) pour accumulateur d'énergie, laquelle est fabriquée selon un procédé d'après une des revendications 1 à 3.

5. Accumulateur d'énergie, comportant au moins une électrode (14) selon la revendication 4.
